# FASCICULE DE BREVET EUROPEEN

(11) **EP 0 974 421 B1**
(45) Date de publication et mention de la délivrance du brevet: **11.09.2002**
(21) Numéro de dépôt: 99401817.4
(22) Date de dépôt: 20.07.1999
(51) Int. Cl.: B23Q 7/04

(54) **Pince de préhension à verrouillage et déverrouilage automatiques**
GREIFER MIT SELBSTVERRIEGELUNG UND SELBSTENTRIEGELUNG
Self-latching and self-releasing gripper

(30) Priorité: 24.07.1998 FR 9809500
(43) Date de publication de la demande: 26.01.2000
(73) Titulaire: Renault Automation Comau, 92365 Meudon La Forêt Cedex (FR)
(72) Inventeur: Thurier, Yvan, 94320 Thiais (FR)
(74) Mandataire: Robert, Jean-Pierre

(56) Documents cités:
- WO-A-93/01915
- WO-A-97/34738
- FR-A- 1 157 023
- FR-A- 2 568 555
- US-A- 4 262 952

## Description

La présente invention concerne une pince de préhension automatique destinée à équiper un manipulateur tel qu'un bras articulé de robot.

Dans le cadre notamment de l'automatisation des chaînes de production, on utilise souvent, pour déplacer ou positionner une pièce, un manipulateur automatisé équipé d'une tête de préhension capable de saisir la pièce à manipuler. Cette tête de préhension peut en particulier être réalisée sous la forme d'une pince possédant deux doigts ou mâchoires mobiles en regard l'une de l'autre de façon à pouvoir venir agripper la pièce à manipuler.

On connaît en particulier des pinces à verrouillage par coincement utilisées depuis longtemps surtout en tant qu'outils de manipulation manuelle. Une pince de ce type comporte principalement une mâchoire fixe et une mâchoire mobile, la mâchoire mobile étant montée sur une coulisse solidaire de la mâchoire fixe pour coulisser suivant une direction longitudinale sous l'effet d'un organe de commande attelé à la mâchoire mobile par l'intermédiaire d'un moyen d'accouplement. Le montage de la mâchoire mobile sur la coulisse présente un jeu de basculement autour d'une direction sensiblement perpendiculaire à la coulisse entre une position de repos déverrouillée ou état passif à coulissement libre et une position de verrouillage ou état actif dans lequel la mâchoire mobile est basculée à fond de jeu en direction opposée à la mâchoire fixe pour son coincement sur la coulisse.

Ce verrouillage par coincement de la mâchoire mobile est avantageux dans la mesure ou il est obtenu par simple serrage de la mâchoire mobile contre la pièce à manipuler, sans qu'il soit besoin d'actionner un quelconque verrou. Cependant, le verrouillage obtenu n'est pas toujours très fiable, notamment en cas de vibration ou d'usure de la mâchoire mobile et/ou de la coulisse. De plus, le déverrouillage de la mâchoire mobile peut s'avérer difficile ou pour le moins malcommode. Il faut en effet libérer la mâchoire mobile de son coincement sur la coulisse, ce qui est d'autant plus difficile que le verrouillage par coincement a lui-même pu être efficace et rigide.

Un but de l'invention est de concevoir une pince de préhension du type précité dans laquelle tant le verrouillage que le déverrouillage de la mâchoire mobile soient automatiques et fiables.

En vue de la réalisation de ce but, on prévoit une pince de préhension à verrouillage et déverrouillage automatique comportant une mâchoire fixe et une mâchoire mobile, montée sur une coulisse solidaire de la mâchoire fixe avec un jeu de basculement autour d'une direction sensiblement perpendiculaire à la coulisse entre un état passif dans lequel elle peut coulisser librement sous l'effet d'un organe de commande attelé à la mâchoire mobile par l'intermédiaire d'un moyen d'accouplement et un état actif dans lequel elle est basculée à fond de jeu en direction opposée à la mâchoire fixe pour son coincement sur la coulisse.

Selon l'invention :
- la mâchoire mobile comporte deux parties mobiles l'une par rapport à l'autre, dont un coulisseau monté sur la coulisse avec le jeu de basculement précité et un mors monté sur le coulisseau pour être mobile entre une position de serrage et une position de desserrage, respectivement rapprochée et éloignée de la mâchoire fixe, sous l'effet d'un système d'actionnement,
- le moyen d'accouplement de l'organe de commande à la mâchoire mobile est mobile et raccordé au système d'actionnement du mors mobile pour en commander le déplacement entre ses positions de serrage et de desserrage, et
- la mâchoire mobile est pourvue d'un moyen de retenue autolibérable qui coopère avec l'un des éléments mors mobile, système d'actionnement et moyen d'accouplement pour, dans un premier temps, maintenir ces éléments dans un état correspondant à la position de desserrage du mors mobile et obtenir une liaison rigide de l'organe de commande à la mâchoire mobile et pour dans un second temps, céder au-delà d'un seuil d'effort prédéterminé exercé par l'organe de commande sur le moyen d'accouplement lors du serrage de la mâchoire mobile contre une pièce à saisir prise entre les deux mâchoires, de manière à autoriser le déplacement du moyen d'accouplement, du système d'actionnement et du mors mobile vers sa position de serrage.

Ainsi, tant que le mors mobile de la mâchoire mobile est en position de desserrage, la mâchoire mobile forme un ensemble monobloc rigidement accouplé à l'organe de commande. La mâchoire mobile, dans l'ensemble unitaire qu'elle forme avec son coulisseau et son mors mobile, coulisse ainsi librement sous l'effet de l'organe de commande en se rapprochant ou en s'écartant de la mâchoire fixe, le moyen d'accouplement et le système d'actionnement étant maintenus bloqués l'un par rapport à l'autre en position de desserrage du mors mobile par le moyen de blocage autolibérable.

Lorsque la pince doit être refermée sur une pièce à saisir, la mâchoire mobile coulisse sous l'effet de l'organe de commande en direction de la mâchoire fixe pour venir prendre en étau la pièce à saisir avec la mâchoire fixe. La mâchoire mobile venant en butée contre la pièce à saisir et ne pouvant donc plus poursuivre sa course vers la mâchoire fixe, l'organe de commande exerce alors sur le moyen d'accouplement qui le relie à la mâchoire mobile un effort croissant en direction de la mâchoire fixe. Lorsque cet effort franchit le seuil prédéterminé du moyen de blocage autolibérable, ce dernier libère le mors mobile, son système d'actionnement et le moyen d'accouplement pour autoriser leur déplacement vers la position de serrage sous l'effet de l'organe de commande poursuivant sa course.

Lors de son déplacement vers sa position de serrage, le mors mobile, en appui contre la pièce à saisir, force le coulisseau de la mâchoire mobile à basculer à fond de jeu dans son état actif, pour son coincement sur la coulisse. On obtient ainsi une prise fiable, rapide et sans jeu de la pièce à saisir entre les mâchoires de la pince.

Inversement, lorsque la pièce ainsi saisie doit être libérée de l'emprise des deux mâchoires, l'organe de commande est actionné en sens inverse pour éloigner la mâchoire mobile de la mâchoire fixe. L'actionnement de l'organe de commande, avant de déplacer la mâchoire mobile dont le coulisseau est encore coincé sur la coulisse, a d'abord pour effet de déplacer le moyen d'accouplement, le système d'actionnement et le mors mobile vers la position de desserrage de ce dernier, ce qui provoque leur réengagement avec le moyen de blocage autolibérable. Le mors mobile étant ainsi éloigné de la pièce, le coulisseau de la mâchoire mobile retrouve son jeu de basculement et peut revenir à son état inactif pour se libérer de son coincement sur la coulisse. L'organe de commande poursuivant sa course éloigne ensuite de la pièce ainsi libérée l'ensemble monobloc de nouveau formé par la mâchoire mobile, avec son coulisseau et le mors mobile, le système d'actionnement, le moyen d'accouplement en position de desserrage.

Selon une première caractéristique avantageuse de l'invention, le moyen de blocage autolibérable est un aimant permanent. Avantageusement alors, l'aimant de retenue coopère avec le moyen d'accouplement de l'organe de commande à la mâchoire mobile.

Selon une seconde caractéristique avantageuse de l'invention, le mors mobile comporte un support monté sur le coulisseau avec la mobilité précitée et un poussoir de contact monté sur le support en regard de la mâchoire fixe pour être élastiquement rétractable à l'opposé de cette mâchoire fixe. Cette élasticité du poussoir de contact permet d'éviter la transmission d'un effort de coincement trop important par le système d'actionnement du mors mobile notamment en cas d'une trop grande rigidité de la pièce à saisir ou des éléments constitutifs de la pince elle-même.

Avantageusement, le mors mobile est équipé d'un détecteur de la rétraction du poussoir. La rétraction du poussoir témoigne en effet du verrouillage complet de la mâchoire mobile. La détection de cette rétraction permet donc de contrôler, éventuellement de façon automatique, le bon fonctionnement de la pince au verrouillage et de stopper l'organe de commande dès que le verrouillage de la mâchoire mobile est obtenu pour éviter toute surcharge de l'organe de commande et du système d'actionnement.

Dans un mode de réalisation avantageux, le support du mors mobile est monté sur le coulisseau par l'intermédiaire de deux leviers articulés au coulisseau d'une part et au support du mors mobile d'autre part pour former un parallélogramme déformable permettant le déplacement du support du mors mobile parallèlement à lui même.

Avantageusement, le système d'actionnement du mors mobile incorpore un système à came. Plus précisément le système d'actionnement comporte un galet associé au mors mobile et un levier ayant une première extrémité en forme de came articulée au coulisseau pour coopérer avec le galet et une seconde extrémité reliée au moyen d'accouplement. Plus précisément encore, le moyen d'accouplement comporte un levier coudé ayant deux branches réunies par un coude articulé au coulisseau, l'une des deux branches étant reliée à l'organe de commande et l'autre branche étant articulée à l'une des deux extrémités d'une tringle dont l'autre extrémité est articulée à la seconde extrémité du levier à came. De préférence, lorsque le moyen de blocage autolibérable est un aimant permanent, cet aimant de retenue est monté fixe sur le coulisseau pour coopérer, en position de desserrage, avec le levier coudé.

Avantageusement encore, le jeu de basculement dans le montage du coulisseau sur la coulisse est limité par un lardon qui est reçu pour glisser sans jeu dans une rainure longitudinale de la coulisse d'une part et pour pivoter avec le jeu souhaité dans une rainure correspondante du coulisseau d'autre part, au moins un ressort de rappel étant disposé entre ce lardon et la rainure du coulisseau pour assurer un rappel élastique de ce coulisseau vers son état inactif.

Avantageusement enfin, le coulisseau de la mâchoire mobile est pourvu d'un crabot agencé pour coopérer avec une denture correspondante de la coulisse lorsque le coulisseau est basculé à fond de jeu en position de verrouillage et pour être dégagé de cette denture lorsque le coulisseau est en position de repos déverrouillée.

D'autres caractéristiques et avantages de l'invention apparaîtront à la lecture de la description qui suit d'un mode de réalisation particulier donné à titre d'exemple non limitatif.

Il sera fait référence aux dessins en annexe, parmi lesquels :
- la figure 1 est une vue de face d'une pince de préhension conforme à l'invention, la mâchoire mobile étant dans son état inactif à coulissement libre ;
- la figure 2 est une vue partielle de la figure 1 montrant plus en détail la mâchoire mobile et son montage sur la coulisse ;
- la figure 3 est une vue analogue à la figure 1, la mâchoire mobile étant dans son état actif refermée contre une pièce à saisir ;
- la figure 4 est une vue partielle de la figure 3, montrant plus en détail la mâchoire mobile et son montage sur la coulisse.

En référence aux figures, une pince de préhension à verrouillage et déverrouillage automatiques conforme à l'invention comporte une poutrelle 1 pourvue approximativement en son milieu d'un organe 2 de son raccordement à l'extrémité d'un manipulateur 3 tel qu'un bras articulé de robot.

La poutrelle 1 possède une première extrémité pourvue d'une mâchoire fixe 4 qui lui est rigidement fixée et qui présente une surface 5 de contact avec une pièce 6 à saisir.

A son extrémité opposée, la poutrelle 1 forme une coulisse 8 sur laquelle est montée une mâchoire mobile 9. Cette mâchoire mobile 9 peut coulisser sur la coulisse 8 suivant une direction de coulissement C parallèle à la poutrelle 1, sous l'effet d'un vérin de commande 10 télescopique d'axe 11 sensiblement parallèle à la direction de coulissement C et adjacent à la poutrelle 1. Ce vérin de commande 10 possède d'une part un corps 12 ayant une extrémité libre 13 articulée à la première extrémité 7 de la poutrelle 1 (qui est pourvue de la mâchoire fixe 4) par un axe d'articulation 14 perpendiculaire au plan des figures c'est-à-dire au plan du U formé par la poutrelle 1 et les deux mâchoires 4 et 9, et d'autre part une tige 15 montée télescopique dans le corps de vérin 12 et possédant une extrémité libre 13 qui est articulée, comme cela sera mieux expliqué ultérieurement, à la mâchoire mobile 9 par un axe d'articulation 17 perpendiculaire au plan des figures. Le vérin 10 peut être du type hydraulique, pneumatique ou électrique et dans tous les cas on pourra prévoir que son alimentation et/ou son pilotage hydraulique pneumatique ou électrique soit réalisé via l'organe de raccordement 2.

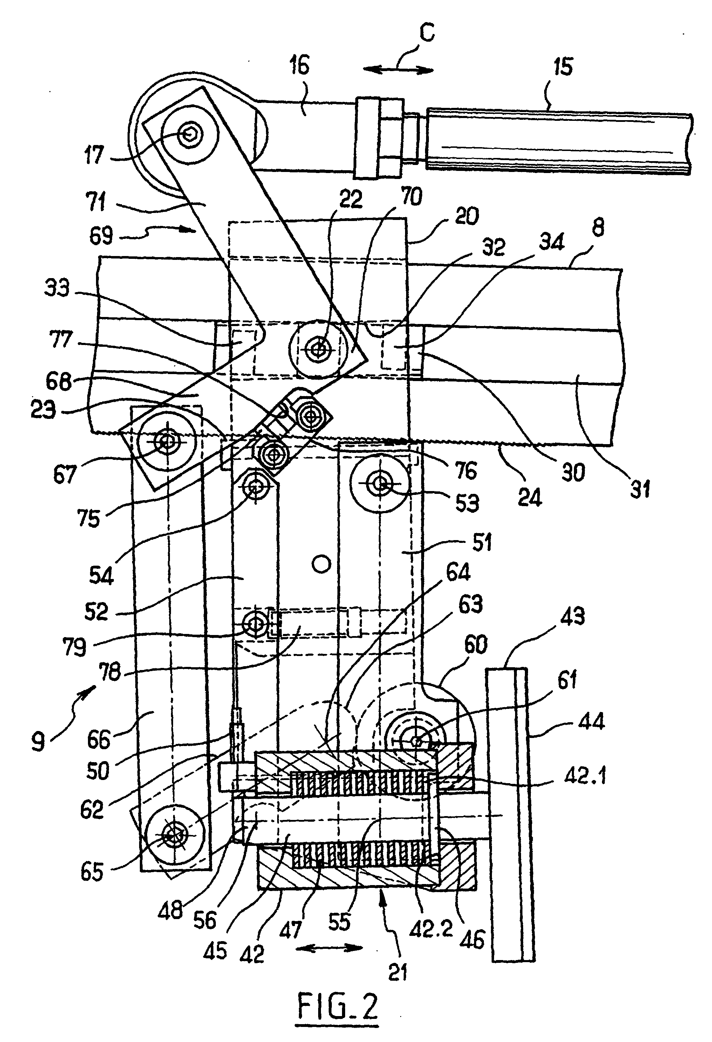

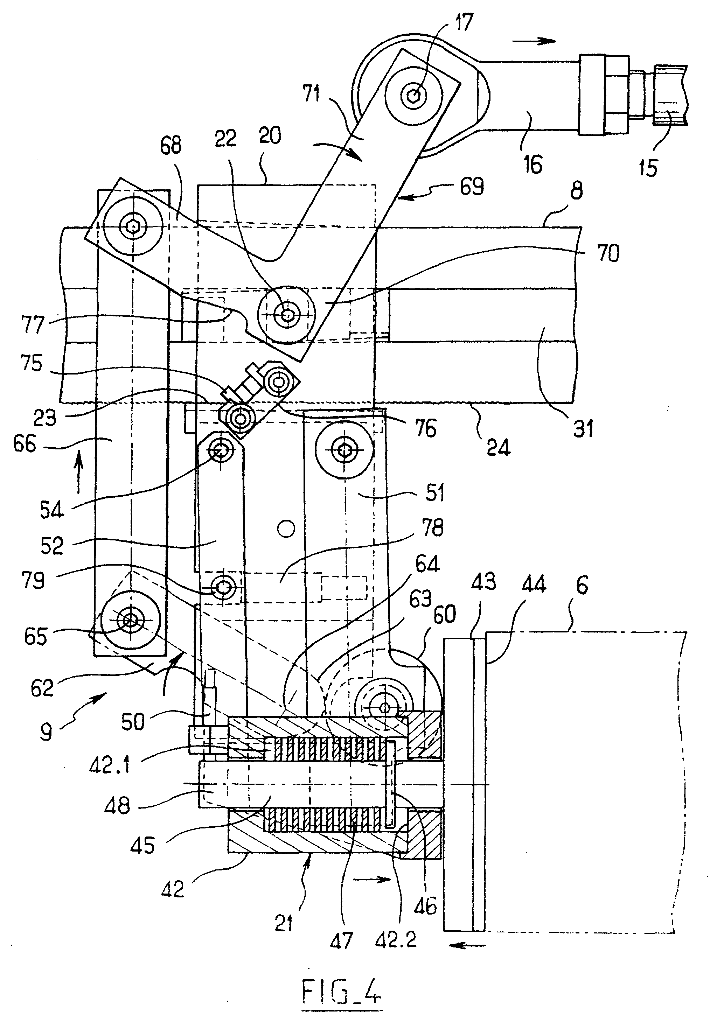

Comme cela est mieux visible aux figures 2 et 4, la mâchoire mobile 9 comporte deux parties mobiles l'une part rapport à l'autre. On distingue ainsi un coulisseau 20 qui réalise le montage coulissant de la mâchoire mobile 9 sur la coulisse 8 et un mors mobile 21 qui assure le contact de la mâchoire mobile 9 avec la pièce 6 à saisir.

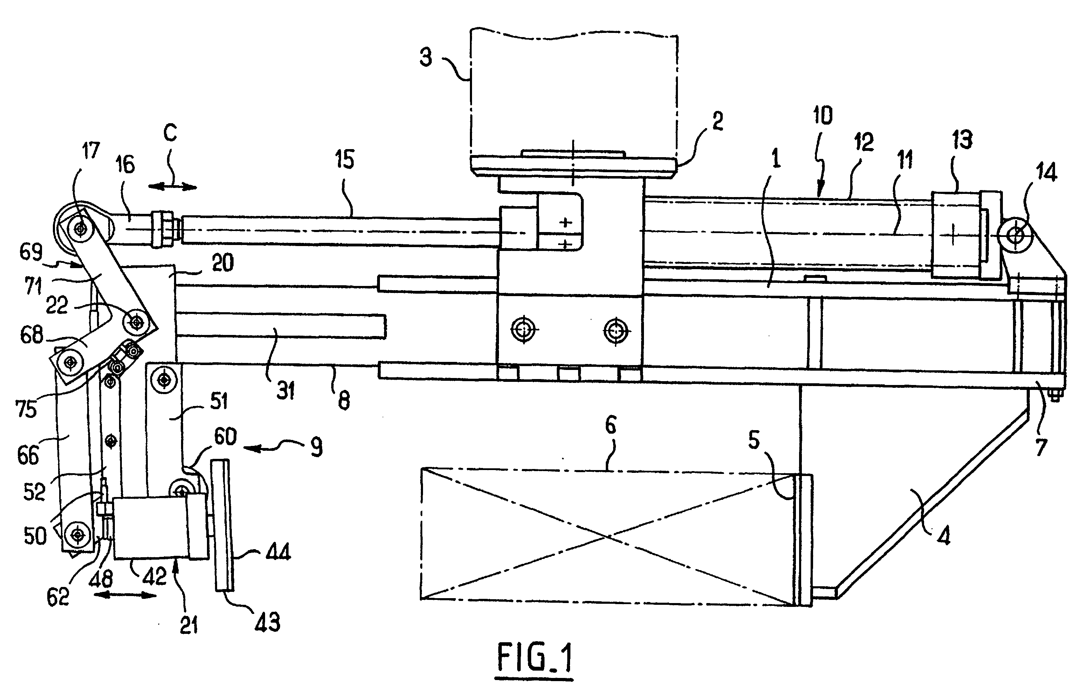

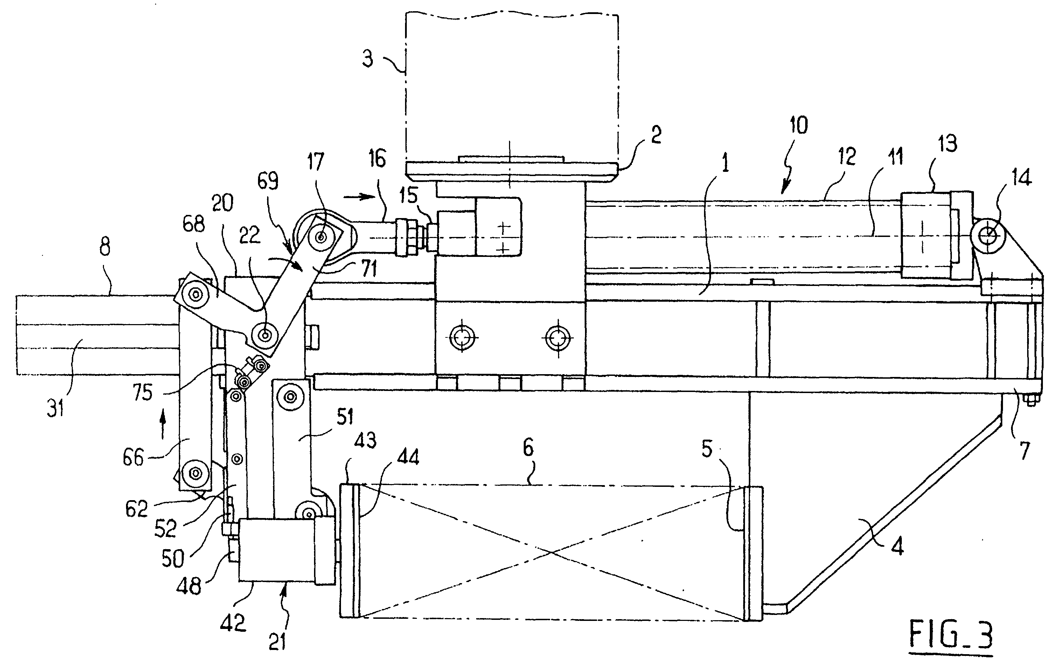

Le montage coulissant du coulisseau 20 sur la coulisse 8 présente un jeu de basculement autour d'un axe 22 perpendiculaire au plan des figures (c'est-à-dire au plan du U formé par la poutrelle 1 et les deux mâchoires 4 et 9). Avec ce jeu, le coulisseau 20 peut basculer autour de l'axe 22 entre un état passif, illustré par les figures 1 et 2, dans lequel le coulisseau 20 et l'ensemble de la mâchoire mobile 9 peuvent coulisser librement sur la coulisse 8, et un état actif, illustré par les figures 3 et 4 dans lequel le coulisseau 20 est basculé à fond de jeu dans le sens horaire des figures, c'est-à-dire de telle sorte que la partie inférieure du coulisseau 20 à laquelle est lié le mors mobile 21 s'écarte de la mâchoire fixe 4.

A l'état actif (figures 3 et 4), le coulisseau 20 est immobilisé par coincement sur la coulisse 8. Plus précisément, le coulisseau 20 est pourvu d'un crabot 23 qui est agencé pour coopérer avec une denture correspondante 24 ménagée latéralement sur la coulisse 8 afin de réaliser un ancrage positif du coulisseau 20 sur la coulisse 8. Ainsi, lorsque le coulisseau 20 est basculé à fond de jeu à l'opposé de la mâchoire fixe 4, son crabot 23 est en prise avec la denture 24. A l'inverse, lorsque le coulisseau 20 est à l'état passif (figure 1 et 2), le crabot 23 est dégagé de la denture 24 pour permettre le coulissement libre du coulisseau 20.

Le jeu de basculement dans le montage du coulisseau 20 sur la coulisse 8 est en outre limité par un lardon 30 qui est reçu pour glisser sans jeu dans une rainure longitudinale 31 de la coulisse 8 d'une part et pour pivoter avec le jeu souhaité autour de l'axe 22 dans une rainure correspondante 32 du coulisseau 8 d'autre part. Deux ressorts de rappel 33, 34 sont en outre disposés dans des logements associés ménagés à chacune des deux extrémités du lardon pour prendre appui, de part et d'autre de ce lardon sur les parois latérales opposées de la rainure 32 du coulisseau 20, de manière à assurer un rappel élastique de ce coulisseau vers son état passif.

Le mors mobile 21 est monté sur le coulisseau 20 pour être mobile, sous l'effet d'un système d'actionnement qui sera décrit ultérieurement, entre une position de serrage rapprochée de la mâchoire fixe 4 et illustrée par les figures 3 et 4 et une positon de desserrage éloignée de la mâchoire fixe 4 et illustrée par les figures 1 et 2.

Plus précisément, le mors mobile 21 comporte un support 42 monté sur le coulisseau 20 avec la mobilité précitée et un poussoir de contact 43 monté sur le support 42 de façon à présenter une face de contact 44 disposée en regard de la face de contact 5 de la mâchoire fixe 4 et pour être élastiquement rétractable à l'opposé de la mâchoire fixe 4, comme illustré par les figures 3 et 4.

En l'espèce, le poussoir 43 est porté par une tige 45 qui traverse le support 42 en pouvant coulisser à l'intérieur de celui-ci. Cette tige 45 possède un épaulement 46 contre lequel prend appui un ressort 47 reçu dans un logement intérieur 42.1 du support 42. Ce ressort 47 assure ainsi un rappel élastique de la tige 45 et du poussoir 44 en direction de la mâchoire fixe 4. La tige 45 possède en outre une extrémité 48 opposée au poussoir 43, qui fait saillie à l'extérieur du support 42 de manière à venir, lors de la rétraction du poussoir 43, en regard d'un détecteur électrique 50 témoignant ainsi de la rétraction du poussoir 43 et par conséquent de la prise de la pièce 6.

Le support 42 qui est monté sur le coulisseau 20 par l'intermédiaire de deux leviers 51,52 articulés d'une part au coulisseau 20 autour d'axes respectifs 53,54 et d'autre part au support 42 autour d'axes respectifs 55,56. Les axes d'articulation 53 à 56 des leviers 51 et 52 sont perpendiculaires au plan des figures (c'est-à-dire au plan du U formé par la poutrelle 1 et les deux mâchoires 4 et 9) et sont agencés de façon à ce que les leviers 51 et 53 forment avec le support 42 un parallélogramme déformable permettant un déplacement du support 42 parallèlement à lui-même. Plus précisément, les axes 53 et 54 d'articulation des leviers 51 et 52 au coulisseau 20 définissent un plan sensiblement parallèle et adjacent à la coulisse 8, tandis que les axes 55 et 56 d'articulation des leviers 51 et 52 au support 42 définissent un plan parallèle au plan défini par les axes 53 et 54 et contenant approximativement l'axe de la tige 45 du poussoir rétractable 43.

Le système d'actionnement du mors mobile 21, qui commande son déplacement entre ses positions de serrage et de desserrage, comporte un galet 60 monté pour tourner librement autour de son axe 61 sur le levier 51, au voisinage de l'axe d'articulation 55 de ce levier, et un levier 62 ayant une extrémité 63 en forme de came articulée au coulisseau 20 autour d'un axe 64 perpendiculaire au plan des figures pour coopérer avec le galet 60. La came 63 et le galet 60 forment ainsi un système à came commandant, par le pivotement du levier 62 autour de son axe 64, le déplacement du support 42 du mors mobile 41.

L'extrémité du levier 62 opposée à la came 63 est articulée autour d'un axe 65 à l'une des deux extrémités d'une tringle 66 dont l'autre extrémité est articulée autour d'un axe 67 à la plus petite branche 68 d'un levier coudé 69 en forme de L dont le coude 70 est articulé autour de l'axe 22 au coulisseau 20. L'autre branche 71 de ce levier 69, plus grande que la branche 68, est articulée par son extrémité libre à l'extrémité 16 de la tige 15 du vérin 10 autour de l'axe 17.

Ce levier 69 réalise ainsi, à lui seul, l'accouplement de la tige 15 du vérin 10 avec la mâchoire mobile 9. Il est de plus raccordé au système d'actionnement du mors mobile 21, constitué par le levier à came 62 et le galet 60, pour commander le déplacement du support 42 entre les positions de serrage et de desserrage du mors mobile. Les figures 1 et 2 d'une part et les figures 3 et 4 d'autre part illustrent respectivement les configurations de desserrage et de serrage du mors mobile 21, de son système d'actionnement 62, 60 et du levier coudé d'accouplement 69.

La mâchoire mobile 9 est pourvue d'un aimant permanent de blocage 75 qui est monté fixe, par l'intermédiaire d'un support 76, sur le coulisseau 20 pour coopérer avec la branche 68 du levier coudé d'accouplement 69 lorsque celui-ci est en position correspondant à l'état passif de la mâchoire mobile afin de le maintenir dans cette position. Pour coopérer convenablement avec l'aimant 75, la branche 68 du levier coudé 69 est, au moins localement, en matière magnétique et présente ici une échancrure 77 offrant une face de contact convenablement orientée et préparée pour une liaison magnétique optimale avec l'aimant 75.

En l'espèce on a prévu de ménager un léger jeu à l'articulation du levier 52 au coulisseau 20 autour de l'axe 54 afin de rompre l'hyperstatisme du parallélogramme déformable formé par les leviers 51, 52 et le support 42 et d'éviter tout coincement dans la mobilité de ce support. On notera que ce jeu est en tout état de cause compensé par l'élasticité du poussoir de contact 43.

Un rappel élastique du support 42 en position de desserrage est en outre assuré par un ressort (non représenté aux figures) reçu dans un logement 78 du coulisseau 20 et exerçant un effort permanent de rappel élastique sur un téton 79 équipant la partie médiane du levier 52.

En service, les différentes phases de fonctionnement de la pince de préhension qui vient d'être décrite se déroule de la manière suivante.

En référence aux figures 1 et 2, aucune pièce n'étant encore saisie, la pince vient simplement se positionner au droit de la pièce 6 à saisir de telle sorte que cette pièce se trouve entre les faces de contact 5 et 24 des mâchoires 4 et 9, ces deux faces étant suffisamment écartées l'une de l'autre. La mâchoire mobile 9, qui est dans son état passif, peut coulisser librement dans les deux sens sur la coulisse 8 sous l'effet du vérin de commande 10. En effet, dans cette configuration, l'aimant 75 maintient le levier coudé d'accouplement 69, et avec lui l'ensemble du mors mobile 21 et de son système d'actionnement, en position de desserrage pour un accouplement rigide ou pseudo-rigide de la tige 15 du vérin de commande 10 à la mâchoire mobile 9. On comprend en effet que l'aimant 75 forme d'une part une butée au pivotement du levier coudé 69 dans le sens anti-horaire sous l'effet d'un effort de poussée de la tige 15 du vérin de commande 10 en direction opposée à la mâchoire fixe 4 et d'autre part un moyen de blocage auto-libérable à résistance limitée qui retient le levier coudé 69 à l'encontre d'un couple de pivotement dans le sens horaire sous l'effet d'un effort de traction de la tige 15 du vérin 10 en direction de la mâchoire fixe 4 jusqu'à un effort seuil prédéterminé exercé par ce vérin. Bien entendu, l'effort de retenue exercé par l'aimant 75 sur le levier coudé 69 à l'encontre d'un effort de traction du vérin de commande 10 est suffisamment élevé pour que, à vide, l'ensemble de la mâchoire mobile 9 (avec son mors mobile 21, son système d'actionnement et son levier coudé d'accouplement 69) puisse être considéré comme monobloc et accouplé rigidement au vérin de commande 10.

Lors de la fermeture de la mâchoire mobile 9 sur la pièce 6 à saisir, comme illustré par les figures 3 et 4, la face 44 du poussoir 43 vient au contact de la pièce 6 qui interrompt de ce fait la course du poussoir 43. Le ressort 47 étant précontraint d'une valeur supérieure à l'effort de retenue exercé par l'aimant 75 sur le levier coudé d'accouplement 69, le poussoir 43, dans un premier temps, ne se rétracte pas ou peu et c'est la liaison entre le levier d'accouplement 69 et l'aimant de retenue 75 qui cède la première, le seuil d'effort prédéterminé exercé par le vérin de commande 10 sur le levier 69 ayant été dépassé. Cette rupture automatique de la liaison du levier 69 à l'aimant de retenue 75 autorise le pivotement de ce levier 69 dans le sens horaire sous l'effet de l'effort de traction du vérin de commande 70 exercé sur la grande branche 71 du levier 69. Il est entendu que, lors de ce pivotement du levier 69, le coulisseau 20 ne coulisse plus sur la coulisse 8 mais reste au contraire immobile en translation, seul le jeu de son montage sur la coulisse 8 permettant son basculement autour de l'axe 22, comme cela est expliqué ci-après.

Le pivotement du levier 69 dans le sens horaire entraîne, par l'intermédiaire de la tringle 66, le pivotement dans le même sens horaire du levier à came 62. La came formée par l'extrémité 63 de ce levier pousse le galet 60 du levier 51, ce qui provoque le déplacement du support 42 du mors mobile 41 avec son autre levier d'articulation 52 en direction de la mâchoire fixe 4 et donc de la pièce 6 à saisir.

Le ressort de rappel (non représenté) situé dans le logement 78 du coulisseau 20 et exerçant l'effort de rappel du levier 52 en position de desserrage du support 42 du mors mobile étant plus faiblement précontraint que le ressort 47 de rappel du poussoir de contact 43, le déplacement du support 42 vers la pièce 6 provoque en premier lieu le basculement du coulisseau 20 autour de son axe 22 dans le sens horaire, c'est-à-dire à l'opposé de la pièce 6, vers sa position de verrouillage. Le crabot 23 du coulisseau 20 vient alors en prise avec la denture 24 de la coulisse 8 pour un verrouillage positif et fiable du coulisseau 20 sur la coulisse 8.

La came 63, poursuivant sa rotation, continue à pousser le support 42 en direction de la pièce 6 et provoque la rétraction du poussoir de contact 43. L'extrémité 48 de la tige 45 du poussoir 43 vient alors, en reculant, en regard du détecteur 50 qui délivre alors un signal témoignant de la rétraction du poussoir 43, information qui peut être utilisée pour stopper la progression du vérin de commande 10.

On comprend donc que la rétraction du poussoir 43 présente un double intérêt : d'une part elle témoigne de la présence de la pièce 10 entre les mâchoires et d'autre part elle garantit de la constance de l'effort de serrage exercé sur cette pièce par la mâchoire mobile 9, cet effort étant prédéterminé par le tarage du ressort 47.

Lorsque la pièce 6 ainsi saisie, après avoir été manipulée par le manipulateur 3 auquel est associée la pince, doit être relâchée, il suffit de piloter le vérin de commande 10 pour que sa tige 15 repousse le bras 71 du levier coudé 69 en direction opposée à la mâchoire fixe 4. Comme le coulisseau 20 est verrouillé en coulissement sur la coulisse 8, cet effort de poussée du vérin de commande 10 provoque le pivotement du levier coudé 69 dans le sens anti-horaire, si bien que, par l'intermédiaire de la tringle 66, le levier à came 62 est également entraîné en rotation autour de son axe 64 dans le sens anti-horaire. Le support 42 du mors mobile 41 est alors repoussé par le ressort 47 en direction opposée à la pièce 6, le poussoir 43 s'écartant progressivement du support 42. Puis, lorsque l'épaulement 46 de la tige 45 du poussoir 43 parvient en butée contre l'extrémité 42.2 du logement intérieur 42.1 du support 42, le ressort de rappel (non représenté) reçu dans le logement 78 du coulisseau 20 repousse, au fur et à mesure du pivotement de la came 63, le levier 52 et donc le support 42 à l'opposé de la pièce 6, vers leur position de desserrage.

Le retour du support mobile 42 dans sa position de desserrage autorise le basculement du coulisseau 20 autour de son axe 22 sous l'effet des ressorts de rappel 33 et 34 jusqu'à ce que les parois latérales de sa rainure 32 viennent en butée contre le lardon 30, le coulisseau 20 étant alors dans son état passif comme illustré aux figures 1 et 2.

En fin de pivotement, la petite branche 68 du levier coudé 69 parvient en butée contre l'aimant 75 qui réengage automatiquement sa prise magnétique avec l'échancrure 77. La mâchoire mobile 9 retrouve alors sa configuration de déverrouillage libre illustrée par les figures 1 et 2 et peut coulisser librement, d'un seul bloc, sous la commande du vérin 10 qui lui est accouplé par l'intermédiaire de la grande branche 71 du levier coudé 69.

L'invention n'est pas limitée au mode de réalisation qui vient d'être décrit, mais englobe au contraire toute variante reprenant ses caractéristiques essentielles.

En particulier, bien que dans l'exemple illustré aux figures, le moyen de blocage autolibérable ait été réalisé sous la forme d'un aimant coopérant avec le levier coudé d'accouplement, il serait également possible d'utiliser tout autre moyen de bocage autolibérable magnétique, élastique ou encore à cliquet coopérant avec le moyen d'accouplement, ou le support de mors mobile ou son système d'actionnement. On pourrait par exemple disposer un simple ressort de traction ou de torsion entre le levier d'accouplement 69 et le coulisseau 20.

Enfin les figures décrites ci-dessus sont la représentation simplifiée du dispositif de l'invention; En particulier le coulisseau 20 est équipé de deux jeux de moyens de commande et d'accouplement, l'un étant celui représenté aux figures et l'autre son symétrique par rapport à un plan longitudinal médian de symétrie de l'appareil passant par l'axe du vérin 10.

## Revendications

1. Pince de préhension à verrouillage et déverrouillage automatique comportant une mâchoire fixe (4) et une mâchoire mobile (9), montée sur une coulisse (8) solidaire de la mâchoire fixe (4), avec un jeu de basculement autour d'une direction (22) sensiblement perpendiculaire à la coulisse (8) entre un état passif dans lequel elle peut coulisser librement sous l'effet d'un organe de commande (10) attelé à la mâchoire mobile (9) par l'intermédiaire d'un moyen d'accouplement (69) et un état actif dans lequel elle est basculée à fond de jeu en direction opposée à la mâchoire fixe (4) pour son coincement sur la coulisse (8), **caractérisée en ce que** la mâchoire mobile (9) comporte deux parties mobiles l'une par rapport à l'autre, dont un coulisseau (20) monté sur la coulisse (8) avec le jeu de basculement précité et un mors (21) monté sur le coulisseau (20) pour être mobile entre une position de serrage et une position de desserrage, respectivement rapprochée et éloignée de la mâchoire fixe (4), sous l'effet d'un système d'actionnement (60,62,66), **en ce que** le moyen d'accouplement (69) de l'organe de commande (10) à la mâchoire mobile (9) est mobile et raccordé au système d'actionnement du mors mobile pour en commander le déplacement entre ses positions de serrage et de desserrage et **en ce que** la mâchoire mobile (21) est pourvue d'un moyen de retenue autolibérable (75) qui coopère avec l'un des éléments mors mobile (21), système d'actionnement (60,62,66) et moyen d'accouplement (75) pour dans un premier temps, maintenir ces éléments dans un état correspondant à la position de desserrage du mors mobile et obtenir une liaison rigide de l'organe de commande (10) à la mâchoire mobile (9) et pour, dans un second temps, céder au-delà d'un seuil d'effort prédéterminé exercé par l'organe de commande (10) sur le moyen d'accouplement (69) lors du serrage de la mâchoire mobile (9) contre une pièce à saisir (6) prise entre les deux mâchoires (4,9), de manière à autoriser le déplacement du moyen d'accouplement (69), du système d'actionnement (60,62,66) et du mors mobile (21) vers sa position de serrage.

2. Pince selon la revendication 1, **caractérisée en ce que** le moyen de retenue autolibérable (75) est un aimant permanent.

3. Pince selon la revendication 2, **caractérisée en ce que** l'aimant de retenue (75) coopère avec le moyen d'accouplement (69) de l'organe de commande (10) à la mâchoire mobile (9).

4. Pince selon l'une des revendications précédentes, **caractérisée en ce que** le mors mobile (41) comporte un support (42) monté sur le coulisseau (20) avec la mobilité précitée et un poussoir de contact (43) monté sur le support (42) en regard de la mâchoire fixe (4) pour être élastiquement rétractable à l'opposé de cette mâchoire fixe.

5. Pince selon la revendication 4, **caractérisée en ce que** le mors mobile (21) est équipé d'un détecteur (50) de la rétraction du poussoir (43).

6. Pince selon l'une des revendications précédentes, **caractérisée en ce que** le support (42) du mors mobile (21) est monté sur le coulisseau (20) par l'intermédiaire de deux leviers (51,52) articulés au coulisseau (20) d'une part et au support (42) du mors mobile (21) d'autre part pour former un parallélogramme déformable permettant le déplacement du support (42) du mors mobile (21) parallèlement à lui même.

7. Pince selon l'une des revendications précédentes, **caractérisée en ce que** le système d'actionnement (60,62,66) du mors mobile (21) incorpore un système à came.

8. Pince selon la revendication 7, **caractérisée en ce que** le système d'actionnement comporte un galet (60) associé au mors mobile (21) et un levier (62) ayant une première extrémité (63) en forme de came articulée au coulisseau (20) pour coopérer avec le galet (60) et une seconde extrémité reliée au moyen d'accouplement (69).

9. Pince selon la revendication 8, **caractérisée en ce que** le moyen d'accouplement comporte un levier coudé (69) ayant deux branches (68,71) réunies par un coude (70) articulé au coulisseau (20), l'une (71) des deux branches étant associée à l'organe de commande (10) et l'autre branche (68) étant articulée à l'une des deux extrémités d'une tringle (66) dont l'autre extrémité est articulée à la seconde extrémité du levier à came (62).

10. Pince selon les revendications 3 et 9, **caractérisée en ce que** l'aimant de retenue (75) est monté fixe sur le coulisseau (20) pour coopérer avec le levier coudé (69).

11. Pince selon l'une des revendications précédentes, **caractérisée en ce que** le jeu de basculement dans le montage du coulisseau (20) sur la coulisse (8) est limité par un lardon (30) qui est reçu pour glisser sans jeu dans une rainure longitudinale (31) de la coulisse (8) d'une part et pour pivoter avec le jeu souhaité dans une rainure correspondante (32) du coulisseau (8) d'autre part, au moins un ressort de rappel (33,34) étant disposé entre ce lardon (30) et la rainure (32) du coulisseau (20) pour assurer un rappel élastique de ce coulisseau vers son état passif.

12. Pince selon l'une des revendications précédentes **caractérisée en ce que** le coulisseau (20) de la mâchoire mobile (9) est pourvu d'un crabot (23) agencé pour coopérer avec une denture correspondante (24) de la coulisse (8) lorsque le coulisseau (20) est basculé à fond de jeu dans son état actif et pour être dégagé de cette denture lorsque le coulisseau (20) est dans son état passif.

## Claims

1. An automatically lockable and unlockable gripping clamp comprising a fixed block (4) and a moving block (9), mounted on a slide rail (8) secured to the fixed block (4) with clearance to tilt about a direction (22) substantially perpendicular to the slide rail (8) between a passive state in which it can slide freely under drive from a control member (10) coupled to the moving block (9) via coupling means (69), and an active state in which it is tilted to the end of the clearance away from the fixed block (4) so as to be jammed against the slide rail (8), the clamp being **characterized in that** the moving block (9) has two portions that are movable relative to each other, comprising a slider (20) mounted on the slide rail (8) with the above-specified tilting clearance, and a jaw (21) mounted on the slider (20) so as to be movable under drive from an actuator system (60, 62, 66) between a clamping position and an unclamping position, respectively close to and remote from the fixed block (8), **in that** the coupling means (69) for coupling the control member (10) to the moving block (9) is movable and connected to the system for actuating the moving jaw to control displacement thereof between its clamping and unclamping positions, and **in that** the moving block (9) is provided with self-releasable retaining means (75) co-operating with one of the elements comprising the moving jaw (21), the actuator system (60, 62, 66), and the coupling means (69) firstly to hold these elements in a state corresponding to the unclamping position of the moving jaw and to obtain a rigid connection between the control member (10) and the moving block (9), and secondly to yield beyond a predetermined force threshold exerted by the control member (10) on the coupling means (69) during clamping of the moving block (9) against a part to be gripped (6) held between the two blocks (4, 9), so as to allow the coupling means (69), the actuator system (60, 62, 66), and the moving jaw (21) to move towards the clamping position.

2. A clamp according to claim 1, **characterized in that** the self-releasable retaining means (75) is a permanent magnet.

3. A clamp according to claim 2, **characterized in that** the retaining magnet (75) co-operates with the coupling means (69) for coupling the control member (10) to the moving block (9).

4. A clamp according to any preceding claim, **characterized in that** the moving jaw (21) comprises a support (42) mounted on the slider (20) with the above-specified freedom of movement, and a contact pusher (43) mounted on the support (42) facing the fixed block (4) so as to be elastically retractable away from said fixed block.

5. A clamp according to claim 4, **characterized in that** the moving jaw (21) is fitted with a detector (50) to detect that the pusher (43) has been retracted.

6. A clamp according to any preceding claim, **characterized in that** the support (42) of the moving jaw (21) is mounted on the slider (20) via two levers (51, 52) hinged to the slider (20) and to the support (42) of the moving jaw (21) so as to form a deformable parallelogram enabling the support (42) of the moving jaw (21) to move parallel to itself.

7. A clamp according to any preceding claim, **characterized in that** the actuator system (60, 62, 66) of the moving jaw (21) incorporates a cam system.

8. A clamp according to claim 7, **characterized in that** the actuator system comprises a wheel (60) associated with the moving jaw (21) and a lever (62) having a first end (63) in the form of a cam hinged to the slider (20) to co-operate with the wheel (60), and a second end connected to the coupling means (69).

9. A clamp according to claim 8, **characterized in that** the coupling means comprises a crank lever (69) having two branches (68, 71) united at an angle (70) itself hinged to the slider (20), one of the two branches (71) being associated with the control member (10) and the other branch (68) being hinged to one of the two ends of a rod (66) whose other end is hinged to the second end of the cam lever (62).

10. A clamp according to claims 3 and 9, **characterized in that** the retaining magnet (75) is mounted to be fixed on the slider (20) so as to co-operate with the crank lever (69).

11. A clamp according to any preceding claim, **characterized in that** the tilting clearance in the mounting of the slider (20) on the slide rail (8) is limited by a strip (30) which is slidably received without play in a longitudinal groove (31) of the slide rail (8) and to pivot with the desired clearance in a corresponding groove (32) of the slider (20), at least one return spring (33, 34) being placed between the strip (30) and the groove (32) in the slider (20) to return the slider resiliently towards its passive state.

12. A clamp according to any preceding claim, **characterized in that** the slider (20) of the moving block (9) is provided with a claw (23) arranged to co-operate with a corresponding set of teeth (24) of the slide rail (8) when the slider (20) is tilted to the end of its clearance in its active state, and to be disengaged from said set of teeth when the slider (20) is in its passive state.

## Patentansprüche

1. Greifzange mit automatischer Verriegelung und Entriegelung, umfassend eine ortsfeste Backe (4) und eine bewegliche Backe (9), die an einer fest mit der ortsfesten Backe (4) verbundenen Führung (8) angebracht ist, mit einem Kippbewegungsspiel um eine zur Führung (8) im wesentlichen senkrechte Richtung (22) zwischen einem passiven Zustand, in dem sie unter der Wirkung eines Steuerorgans (10), das mittels eines Kopplungsmittels (69) an die bewegliche Backe (9) gekoppelt ist, frei verschiebbar ist, und einem aktiven Zustand, in dem sie zu ihrem Festklemmen an der Führung (8) in die zur ortsfesten Backe (4) entgegengesetzte Richtung bis zum Ende des Spiels gekippt ist, **dadurch gekennzeichnet, daß** die bewegliche Backe (9) zwei zueinander bewegliche Teile hat, nämlich einen Schieber (20), der mit dem vorgenannten Kippbewegungsspiel an der Führung (8) angebracht ist, und eine Spannbacke (21), die an dem Schieber (20) angebracht ist, um unter der Wirkung eines Betätigungssystems (60, 62, 66) zwischen einer Verriegelungsstellung und einer Entriegelungsstellung, in der sie an die ortsfeste Backe (4) angenähert bzw. von dieser entfernt ist, beweglich zu sein, daß das Kopplungsmittel (69) zur Kopplung des Steuerorgans (10) an die bewegliche Backe (9) beweglich ist und mit dem Betätigungssystem der beweglichen Spannbacke verbunden ist, um deren Verschiebung zwischen ihrer Verriegelungsstellung und ihrer Entriegelungsstellung zu steuern, und daß die bewegliche Backe (9) mit einem selbstlösenden Rückhaltemittel (75) versehen ist, das mit einem der Elemente bewegliche Spannbacke (21), Betätigungssystem (60, 62, 66) und Kopplungsmittel (69) zusammenwirkt, um während einer ersten Zeitdauer diese Elemente in einem Zustand zu halten, der der Entriegelungsstellung der beweglichen Spannbacke entspricht, und um eine starre Verbindung des Steuerorgans (10) mit der beweglichen Backe (9) zu erzielen, und um während einer zweiten Zeitdauer bei Überschreiten eines vorgegebenen Schwellenwertes einer Kraft, die durch das Steuerorgan (10) auf das Kopplungsmittel (69) während des Drückens der beweglichen Backe (9) an ein zu ergreifendes Teil (6) ausgeübt wird, das zwischen den beiden Backen (4, 9) im Eingriff ist, nachzugeben, derart daß die Verschiebung des Kopplungsmittels (69), des Betätigungssystems (60, 62, 66) und der beweglichen Spannbacke (21) in Richtung ihrer Verriegelungsstellung gewährleistet wird.

2. Zange nach Anspruch 1, **dadurch gekennzeichnet, daß** das selbstlösende Rückhaltemittel (75) ein Dauermagnet ist.

3. Zange nach Anspruch 2, **dadurch gekennzeichnet, daß** der Rückhaltemagnet (75) mit dem Kopplungsmittel (69) zusammenwirkt, um das Steuerorgans (10) an die bewegliche Backe (9) anzukoppeln.

4. Zange nach einem der vorhergehenden Ansprüche, **dadurch gekennzeichnet, daß** die bewegliche Spannbacke (21) einen Träger (42) hat, der mit der vorgenannten Beweglichkeit an dem Schieber (20) angebracht ist, sowie einen Kontaktstößel (43), der so an dem Träger (42) gegenüber der ortsfesten Backe (4) angebracht ist, daß er in die zu dieser ortfesten Backe entgegengesetzte Richtung elastisch zurückgezogen werden kann.

5. Zange nach Anspruch 4, **dadurch gekennzeichnet, daß** die bewegliche Spannbacke (21) mit einem Detektor (50) zum Erfassen der Rückzugsstellung des Stößels (43) versehen ist.

6. Zange nach einem der vorhergehenden Ansprüche, **dadurch gekennzeichnet, daß** der Träger (42) der beweglichen Spannbacke (21) mittels zweier Hebel (51, 52) an dem Schieber (20) angebracht ist, die einerseits gelenkig mit dem Schieber (20) und andererseits gelenkig mit dem Träger (42) der beweglichen Spannbacke (21) verbunden sind, um ein verformbares Parallelogramm zu bilden, das die Verschiebung des Trägers (42) der beweglichen Spannbacke (21) parallel zu ihm selbst ermöglicht.

7. Zange nach einem der vorhergehenden Ansprüche, **dadurch gekennzeichnet, daß** das Betätigungssystem (60, 62, 66) der beweglichen Spannbacke (21) ein Nockensystem enthält.

8. Zange nach Anspruch 7, **dadurch gekennzeichnet, daß** das Betätigungssystem eine Rolle (60) umfaßt, die mit der beweglichen Spannbacke (21) verbunden ist, sowie einen Hebel (62), der ein erstes nockenförmiges Ende (63) hat, das gelenkig mit dem Schieber (20) verbunden ist, um mit der Rolle (60) zusammenzuwirken, sowie ein zweites Ende, das mit dem Kopplungsmittel (69) verbunden ist.

9. Zange nach Anspruch 8, **dadurch gekennzeichnet, daß** das Kopplungsmittel einen Kniehebel (69) einschließt, der zwei Arme (68, 71) hat, die über ein gelenkig mit dem Schieber (20) verbundenes Kniestück (70) miteinander verbunden sind, wobei einer (71) der beiden Arme mit dem Steuerorgan (10) und der andere Arm (68) gelenkig mit einem der beiden Enden einer Stange (66) verbunden ist, deren anderes Ende gelenkig mit dem zweiten Ende des Nockenhebels (62) verbunden ist.

10. Zange nach den Ansprüchen 3 und 9, **dadurch gekennzeichnet, daß** der Rückhaltemagnet (75) fest an dem Schieber (20) angebracht ist, um mit dem Kniehebel (69) zusammenzuwirken.

11. Zange nach einem der vorhergehenden Ansprüche, **dadurch gekennzeichnet, daß** das Kippbewegungsspiel in der Montage des Schiebers (20) an der Führung (8) von einer Leiste (30) begrenzt ist, die aufgenommen ist, um einerseits ohne Spiel in einer Längsnut (31) der Führung (8) zu gleiten und um sich andererseits mit dem gewünschten Spiel in einer entsprechenden Nut (32) des Schiebers (20) zu drehen, wobei mindestens eine Rückstellfeder (33, 34) zwischen dieser Leiste (30) und der Nut (32) des Schiebers (20) angeordnet ist, um einen elastischen Rückzug dieses Schiebers (20) in Richtung seines passiven Zustandes sicherzustellen.

12. Zange nach einem der vorhergehenden Ansprüche, **dadurch gekennzeichnet, daß** der Schieber (20) der beweglichen Backe (9) mit einer Klaue (23) versehen ist, die derart angeordnet ist, daß sie mit einer entsprechenden Zahnung (24) der Führung (8) zusammenwirkt, wenn der Schieber (20) in seinem aktiven Zustand bis zum Ende des Spiels gekippt ist, und aus dieser Zahnung ausgerückt wird, wenn der Schieber (20) in seinem passiven Zustand ist.
